(19)

Europäisches Patentamt

European Patent Office

Office européen des brevets

(11)  **EP 4 693 693 A1**

(12)  **EUROPEAN PATENT APPLICATION**

published in accordance with Art. 153(4) EPC

(43) Date of publication:
**11.02.2026  Bulletin 2026/07**

(21) Application number: **23932347.0**

(22) Date of filing: **10.04.2023**

(51) International Patent Classification (IPC):
*H01M 50/491* *(2021.01)*

(52) Cooperative Patent Classification (CPC):
**H01M 50/491**

(86) International application number:
**PCT/CN2023/087319**

(87) International publication number:
**WO 2024/212047 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Contemporary Amperex Technology Co., Limited**
**Ningde, Fujian 352100 (CN)**

(72) Inventors:
• **MU, Xueying**
**Ningde, Fujian 352100 (CN)**

• **YANG, Jianrui**
**Ningde, Fujian 352100 (CN)**
• **SUN, Chengdong**
**Ningde, Fujian 352100 (CN)**
• **OUYANG, Chuying**
**Ningde, Fujian 352100 (CN)**
• **HUANG, Siying**
**Ningde, Fujian 352100 (CN)**

(74) Representative: **Gong, Jinping**
**CocreateIP**
**Neumarkter Straße 21**
**81673 München (DE)**

(54)  **SEPARATOR, AND SECONDARY BATTERY AND ELECTRIC DEVICE RELATED THERETO**

(57)    The embodiments of the present application provide a separator, and a secondary battery and an electric device related thereto. The separator comprises a first porous base membrane, a second porous base membrane and a coating, wherein the coating is arranged between the first porous base membrane and the second porous base membrane, and comprises a filler having a pore structure.

<u>**5**</u>

FIG. 1

EP 4 693 693 A1

## EP 4 693 693 A1

**Description**

TECHNICAL FIELD

The present application relates to a separator, and a secondary battery and an electric device related thereto.

BACKGROUND

Secondary batteries have the characteristics of high capacity and long lifespan and are therefore widely used in electronic devices, for example, mobile phones, laptop computers, electric bicycles, electric vehicles, electric airplanes, electric ships, electric toy cars, electric toy ships, electric toy airplanes, and electric tools.

As the application range of batteries becomes wider, the requirements for the performance of secondary batteries are also becoming more stringent. For example, the capacity retention rate of the secondary batteries still needs to be further improved.

SUMMARY

The present application is made in view of the above problems, and its purpose is to provide a separator, and a secondary battery and an electric device related thereto.

A first aspect of the present application provides a separator. The separator includes a first porous base film, a second porous base film, and a coating. The coating is disposed between the first porous base film and the second porous base film, and the coating includes a pore-structured filler.

Therefore, the coating according to embodiments of the present application includes a pore-structured filler. The pores are conducive to the physical adsorption of the electrolytic solution and the storage of the electrolytic solution inside the pores, thereby improving the liquid absorption and retention capacities for the electrolytic solution. In addition, the pore structure can increase the transport rate of active ions, thereby effectively reducing resistance and increasing the capacity retention rate of the secondary battery. The first porous base film and the second porous base film are disposed on both sides of the coating, and the first porous base film and the second porous base film can provide the separator with excellent mechanical properties, thereby improving the reliability of the secondary battery. The first porous base film and the second porous base film themselves have a liquid absorption capacity, which can further improve the liquid retention capacity. In addition, since the coating is positioned between the first porous base film and the second porous base film, the first porous base film and the second porous base film encapsulate the coating, thereby further improving the liquid retention capacity of the coating. Moreover, the coating can be interposed between the first porous base film and the second porous base film for fixation, a local area of the coating is less likely to fall off and separate from the porous base film, the electrolytic solution is relatively evenly distributed in the separator, and the transport ability of active ions is relatively uniform, facilitating a further improvement in the cycle performance of the secondary battery, thereby increasing the capacity retention rate.

In some embodiments, an average pore size of a pore structure of the filler is denoted as $D_0$ in nm, where $D_0 \geq 5$; and optionally, $10 \leq D_0 \leq 105$. When the average pore size of the pore structure is within the above range, the filler has a strong affinity for the electrolytic solution, which helps to improve the liquid absorption and retention capacities of the filler and increase the capacity retention rate of the separator, and can further increase the transport rate of active ions, thereby effectively reducing resistance and extending the service life of the secondary battery.

In some embodiments, a porosity of the filler is denoted as P, where $20\% \leq P \leq 80\%$; optionally, $20\% \leq P \leq 70\%$; and further optionally, $40\% \leq P \leq 70\%$. When the porosity of the filler is within the above range, the volume of the pore structure of the filler is relatively large, which enables to store a relatively large amount of the electrolytic solution and increase the capacity retention rate of the separator, and is conducive to increasing the transport rate of active ions, thereby reducing resistance and extending the service life of the secondary battery. In addition, the volume of the pore structure of the filler is not very large, and the structural stability of the filler is high, helping to improve the overall structural strength of the separator.

In some embodiments, a specific surface area of the filler is denoted as S in $m^2/g$, where $40 \leq S \leq 150$; optionally, $60 \leq S \leq 120$; and further optionally, $60 \leq S \leq 80$. When the specific surface area of the filler is within the above range, the contact area between the outer surface of the filler and the electrolytic solution is large, which facilitates the absorption of the electrolytic solution into the filler, increases the capacity retention rate of the separator, and can further increase the transport rate of active ions, thereby effectively reducing resistance and extending the service life of the secondary battery.

In some embodiments, a volume distribution particle size Dv50 of the filler is 0.01 $\mu$m to 3 $\mu$m; and optionally, 0.05 $\mu$m to 2 $\mu$m. When the volume distribution particle size Dv50 of the filler is within the above range, it is more conducive to the uniform dispersion of the filler in the coating.

In some embodiments, the porous filler includes at least one of metal-organic frameworks and mineral materials.

In some embodiments, the metal-organic frameworks include one or more of isoreticular metal-organic frameworks, zeolite-imidazolate frameworks, materials of Institute Lavoisier, pocket-channel frameworks, coordinational pillared layers, and university of oslo.

In some embodiments, the mineral materials include one or more of halloysite nanotubes, vermiculite, attapulgite, sepiolite, montmorillonite, hectorite, kaolinite, diatomite, and hydroxylapatite. Optionally, the mineral materials include a through-hole structure; and still further optionally, the mineral materials include halloysite nanotubes.

In some embodiments, the pore structure of the filler includes at least one of a through-hole structure and a three-dimensional pore structure. The above pore structure is conducive to further improving the liquid absorption and retention capacities of the separator.

In some embodiments, a tube thickness of the halloysite nanotubes is H in nm, where $2 \leq H \leq 10$; and optionally, $2 \leq H \leq 5$.

In some embodiments, a tube length of the halloysite nanotubes is L in $\mu$m, where $0.05 \leq L \leq 2.50$; and optionally, $0.15 \leq L \leq 1.50$.

Therefore, when the tube thickness and/or the tube length of the halloysite nanotubes according to the embodiments of the present application are within the above range, it is conducive to further improving the liquid absorption and retention capacities of the halloysite nanotubes, increasing the capacity retention rate of the separator, and enhancing the transport performance of active ions. Thus, the resistance is effectively reduced and the service life of the secondary battery is extended.

In some embodiments, a mass percentage content of the filler in the coating is greater than or equal to 10% and less than 100%; and optionally, 30% to 95%. When the mass percentage content of the filler is within the above range, the overall liquid absorption and retention capacities of the separator can be improved, and the capacity retention rate of the separator is increased, facilitating an enhancement of the transport performance of active ions. Thus, the resistance is effectively reduced and the service life of the secondary battery is extended.

In some embodiments, a thickness of the coating is $W_1$ in $\mu$m, where $W_1 \geq 0.3$; optionally, $W_1 \geq 0.5$; and further optionally, $0.5 \leq W_1 \leq 5.0$.

In some embodiments, the coating further includes a heat-resistant filler; optionally, a porosity of the heat-resistant filler is less than 15%; further optionally, less than 10%; and still further optionally, less than 5%. The above heat-resistant filler can improve the heat resistance of the separator.

In some embodiments, the coating further includes a heat-resistant filler. An average pore size of the heat-resistant filler is less than or equal to 0.5 nm. The average pore size of the above heat-resistant filler is relatively small, which is conducive to enhancing the mechanical strength of the heat-resistant filler and improving the overall mechanical properties of the separator.

In some embodiments, a mass percentage content of the heat-resistant filler in the coating is denoted as A, and the mass percentage content of the pore-structured filler in the coating is denoted as B, where $0.1 \leq A/B \leq 10$. The heat-resistant inorganic particles can further improve the overall heat resistance of the separator.

In some embodiments, the mass percentage content of the heat-resistant filler in the coating is less than or equal to 85%.

In some embodiments, the heat-resistant filler includes at least one of inorganic particles and organic particles.

In some embodiments, the coating further includes a binder. Optionally, the binder includes one or more of polyacrylate, acrylic acid, carboxymethyl cellulose, polyvinylidene fluoride-co-trichloroethylene copolymer, polymethyl methacrylate, polyvinylpyrrolidone, polyvinyl acetate, polyethylene-co-vinyl acetate copolymer, polyethylene oxide, polyarylate, cellulose acetate, cellulose acetate butyrate, cellulose acetate propionate, polyvinylidene fluoride, polyacrylonitrile, polyvinyl alcohol, starch, hydroxypropyl cellulose, regenerated cellulose, tetrafluoroethylene, polyethylene, polypropylene, and cyanoethyl amylopectin.

In some embodiments, a melting point of the first porous base film is less than or equal to a melting point of the second porous base film.

In some embodiments, a ratio of an average pore size of the first porous base film to an average pore size of the second porous base film is greater than 1; and optionally, greater than or equal to 1.05.

In some embodiments, the average pore size of the first porous base film is 0.1 $\mu$m to 2 $\mu$m; and more optionally, 0.1 $\mu$m to 0.5 $\mu$m.

In some embodiments, the average pore size of the second porous base film is 0.1 $\mu$m to 2 $\mu$m; and more optionally, 0.1 $\mu$m to 0.35 $\mu$m.

In some embodiments, a porosity of the first porous base film is $P_1$, and a porosity of the second porous base film is $P_2$, where $P_1/P_2 \geq 1.02$; and optionally, $1.05 \leq P_1/P_2 \leq 2.50$.

In some embodiments, $30\% \leq P_1 \leq 80\%$; optionally, $35\% \leq P_1 \leq 50\%$; and/or $25\% \leq P_2 \leq 70\%$; optionally, $35\% \leq P_2 \leq 45\%$.

In some embodiments, a ratio of a thickness of the first porous base film to a thickness of the second porous base film is greater than or equal to 1.02; and optionally, 1.2 to 5.0.

In some embodiments, the thickness of the first porous base film is 1 $\mu$m to 12 $\mu$m; and optionally, 3 $\mu$m to 6 $\mu$m.

In some embodiments, the thickness of the second porous base film is 2 μm to 12 μm; and optionally, 3 μm to 5 μm.

In some embodiments, an ion conductivity of the first porous base film is greater than an ion conductivity of the second porous base film.

In some embodiments, the ion conductivity of the first porous base film is 0.5 *mS/cm* to 1.5 *mS/cm;* and optionally, 0.7 *mS/cm* to 1.3 *mS/cm.*

In some embodiments, the ion conductivity of the second porous base film is 0.4 *mS/cm* to 1.5 *mS/cm;* and optionally, 0.6 *mS/cm* to 1.3 *mS/cm.*

In some embodiments, a liquid absorption rate of the separator is 80% to 180%; and optionally, 100% to 170%.

A second aspect of the present application provides a secondary battery, which includes the separator according to any one of the embodiments of the first aspect of the present application.

A third aspect of the present application provides an electric device, which includes the secondary battery according to the second aspect of the present application.

BRIEF DESCRIPTION OF THE DRAWINGS

To more clearly illustrate the technical solutions according to examples of embodiments of the present application, the drawings required for illustrating the examples of the embodiments of the present application are briefly described below. Apparently, the drawings in the following description illustrate merely some examples of the embodiments of the present application, and those of ordinary skills in the art may still derive other drawings from these drawings without creative efforts.

FIG. 1 is a schematic diagram of one embodiment of a secondary battery according to the embodiments of the present application.

FIG. 2 is an exploded schematic diagram of the embodiment of the secondary battery shown in FIG. 1.

FIG. 3 is a schematic diagram of one embodiment of a battery module according to the embodiments of the present application.

FIG. 4 is a schematic diagram of one embodiment of a battery pack according to the embodiments of the present application.

FIG. 5 is an exploded schematic diagram of the embodiment of the battery pack shown in FIG. 4.

FIG. 6 is a schematic diagram of one embodiment of an electric device including the secondary battery according to the embodiments of the present application as a power source.

The drawings are not necessarily drawn to scale.

Description of the reference numerals are as follows:

1: battery pack; 2: upper case body; 3: lower case body; 4: battery module;

5: secondary battery; 51: housing; 52: electrode assembly;

53: cover plate; and

6: electric device.

DETAILED DESCRIPTION

Hereinafter, embodiments of the separator, and the secondary battery and the electric device related thereto of the present application are specifically disclosed in detail. However, unnecessarily detailed descriptions may be omitted. For example, detailed descriptions of well-known matters and repetitive descriptions of actually identical structures may be omitted. This is to avoid unnecessary lengthiness of the following descriptions and to facilitate understanding by those skilled in the art. Additionally, the drawings and the following descriptions are provided to enable those skilled in the art to fully understand the present application and are not intended to limit the subject matter recited in the claims.

The "ranges" disclosed in the present application are defined with lower and upper limits. A given range is defined by selecting a lower limit and an upper limit that delineate the boundaries of a particular range. Ranges defined in this manner may include or exclude the end values and can be combined arbitrarily, which means that any lower limit may be combined with any upper limit to form a range. For example, if ranges of 60-120 and 80-110 are listed for a particular parameter, it is understood that ranges of 60-110 and 80-120 are also anticipated. Additionally, if the minimum range values listed are 1 and 2, and the maximum range values listed are 3, 4, and 5, then the following ranges can all be anticipated: 1-3, 1-4, 1-5, 2-3, 2-4, and 2-5. In the present application, unless otherwise specified, the numerical range "a-b" indicates an abbreviated representation of any combination of real numbers between a and b, where both a and b are real numbers. For example, the numerical range "0-5" indicates that all real numbers between "0-5" are listed herein, and "0-5" is merely an abbreviated representation of a combination of these numerical values. Additionally, when stating that a parameter is an integer $\geq 2$, it is equivalent to disclosing that the parameter is, for example, an integer of 2, 3, 4, 5, 6, 7, 8, 9, 10, 11, 12, or the like.

Unless otherwise specified, all embodiments and optional embodiments of the present application can be combined with one another to form new technical solutions. Unless otherwise specified, all technical features and optional technical features of the present application can be combined with one another to form new technical solutions.

Unless otherwise specified, all steps of the present application can be performed sequentially or randomly, preferably sequentially. For example, if the method includes steps (a) and (b), it indicates that the method may include steps (a) and (b) performed sequentially or steps (b) and (a) performed sequentially. For example, if the mentioned method may further include step (c), it indicates that step (c) may be added to the method in any order; for example, the method may include steps (a), (b), and (c), or steps (a), (c), and (b), or steps (c), (a), and (b), or the like.

Unless otherwise specified, the "include" and "comprise" mentioned in the present application are openended or closed-ended. For example, the "include" and "comprise" may indicate that other unlisted components may also be included or comprised or that only the listed components are included or comprised.

Unless otherwise specified, the term "or" in the present application is inclusive. For example, the phrase "A or B" indicates "A, B, or both A and B". More specifically, any one of the following conditions satisfies the condition "A or B": A is true (or present) and B is false (or absent); A is false (or absent) and B is true (or present); or both A and B are true (or present).

In the present application, the terms "first", "second", and the like are used for descriptive purposes only and shall not be construed as indicating or implying relative importance.

In the present application, the terms "a plurality of" and "multiple" mean two or more.

Unless otherwise specified, the terms used in the present application have the well-known meanings that are commonly understood by those skilled in the art.

Unless otherwise specified, the numerical values of the parameters mentioned in the present application can be determined by various test methods commonly used in the art. For example, they can be determined according to the test methods given in the embodiments of the present application.

The secondary battery includes a positive electrode plate, a negative electrode plate, a separator, and an electrolytic solution. The separator is disposed between the positive electrode plate and the negative electrode plate to primarily prevent the positive electrode plate and the negative electrode plate from short-circuiting while allowing active ions to pass freely to form a circuit.

With the application and promotion of secondary batteries, the requirements for the performance (e.g., service life) of secondary batteries are becoming increasingly stringent. The separator is an important component of secondary batteries, and the service life of secondary batteries can be extended by improving the performance of the separator.

The separator is usually a polymer separator. However, the polymer separator has a low surface polarity, leading to poor wettability of the separator to the electrolytic solution. In order to improve the wettability of the separator, inorganic ceramic particles are usually disposed on the surface of the polymer separator in the related art, expecting to improve the overall wettability of the separator to the electrolytic solution by the inorganic ceramic particles. However, the above method provides only a small improvement in the liquid absorption and retention capacities of the separator; as a result, during the charging and discharging process of the secondary battery, the migration rate of active ions and the like is limited by the insufficient electrolytic solution, thereby severely degrading the performance of the secondary battery, for example, the capacity retention rate.

In view of the above problems, the embodiments of the present application improve the separator. The separator includes a first porous base film and a second porous base film, and the first porous base film and the second porous base film can provide the separator with excellent mechanical properties. A coating is disposed between the first porous base film and the second porous base film, and the coating includes a pore-structured filler, which is conducive to the absorption of the electrolytic solution and can store the electrolytic solution inside the porous filler, thereby improving the liquid absorption and retention capacities. In addition, the pore structure of the porous filler can increase the transport rate of active ions, thereby effectively reducing resistance and increasing the capacity retention rate of the secondary battery.

## Separator

In a first aspect, the embodiments of the present application provide a separator. The separator is applied to a secondary battery.

The separator includes a first porous base film, a second porous base film, and a coating. The coating is disposed between the first porous base film and the second porous base film, and the coating includes a pore-structured filler.

The number of pore structures of the filler may be one or more. In the case that one pore structure is provided, the pore structure may be a straight pore that penetrates through the filler itself or a blind pore that does not penetrate through the filler. In the case that a plurality of pore structures are provided, the pore structures may be pores parallel to one another or intersecting one another. The pore sizes of the pores may be the same or different and the shapes of the pores may be the same or different. Optionally, the pore size of the pore structure is in the nanometer range, and the pore structure includes micropores, mesopores, and macropores. Micropores refer to pores having a diameter of less than about 2 nm. Mesopores refer to pores having a diameter of about 2 nm to about 5 nm. Macropores refer to pores having a diameter of greater than 50 nm.

The coating includes a pore-structured filler. The pores are conducive to the physical adsorption of the electrolytic solution and the storage of the electrolytic solution inside the pores, thereby improving the liquid absorption and retention capacities for the electrolytic solution. In addition, the pore structure of the porous filler can increase the transport rate of active ions, thereby effectively reducing resistance and increasing the capacity retention rate of the secondary battery.

The first porous base film and the second porous base film are disposed on both sides of the coating, and the first porous base film and the second porous base film themselves have a liquid absorption capacity, which can further improve the liquid retention capacity. In addition, since the coating is positioned between the first porous base film and the second porous base film, the first porous base film and the second porous base film encapsulate the coating, thereby further improving the liquid retention capacity of the coating. Moreover, the coating can be interposed between the first porous base film and the second porous base film for fixation, preventing local areas of the coating from falling off and separating from the porous base film, such that the electrolytic solution is relatively evenly distributed in the separator, and the transport ability of active ions is relatively uniform, facilitating a further improvement in the cycle performance of the secondary battery.

In some embodiments, the average pore size of the pore structure is denoted as $D_0$ in nm, where $D_0 \geq 5$; optionally, $5 \leq D_0 \leq 105$; and further optionally, $10 \leq D_0 \leq 105$.

When the average pore size of the pore structure is within the above range, the filler has a strong affinity for the electrolytic solution, which helps to improve the liquid absorption and retention capacities of the filler and increase the capacity retention rate of the separator, and can further increase the transport rate of active ions, thereby effectively reducing resistance and extending the service life of the secondary battery. Illustratively, the average pore size of the pore structure may be 5 nm, 8 nm, 10 nm, 15 nm, 20 nm, 25 nm, 28 nm, 30 nm, 35 nm, 40 nm, 45 nm, 50 nm, 55 nm, 60 nm, 65 nm, 70 nm, 75 nm, 80 nm, 90 nm, 100 nm, 105 nm, or a range consisting of any two of the foregoing numerical values.

In the embodiments of the present application, the average pore size of the filler has a meaning well known in the art and can be tested by using devices and methods known in the art. For example, the test can be performed by using the BET nitrogen absorption and desorption according to GB/T 19587-2017.

In some embodiments, the porosity of the filler is denoted as P, where $20\% \leq P \leq 80\%$. Optionally, $20\% \leq P \leq 70\%$, and further optionally, $40\% \leq P \leq 70\%$.

When the porosity of the filler is within the above range, the volume of the pore structure of the filler is relatively large, which enables to store a relatively large amount of the electrolytic solution and increase the capacity retention rate of the separator, and is conducive to increasing the transport rate of active ions, thereby reducing resistance and extending the service life of the secondary battery. In addition, the volume of the pore structure of the filler is not very large, and the structural stability of the filler is high, helping to improve the overall structural strength of the separator. Illustratively, the porosity of the filler may be 20%, 30%, 40%, 50%, 60%, 70%, 80%, or a range consisting of any two of the foregoing numerical values.

In the embodiments of the present application, the porosity refers to the ratio of the pore volume in the filler to the total volume of the filler. The porosity can be measured by the gas displacement method according to GB/T24586. Porosity P% = (L1 - L2)/L1 * 100%, where L1 represents the apparent volume of the sample and L2 represents the true volume of the sample.)

In some embodiments, the specific surface area of the filler is denoted as S in $m^2/g$, where $40 \leq S \leq 150$. Optionally, $60 \leq S \leq 120$; and further optionally, $60 \leq S \leq 80$.

When the specific surface area of the filler is within the above range, the contact area between the outer surface of the filler and the electrolytic solution is large, which facilitates the absorption of the electrolytic solution into the filler, increases the capacity retention rate of the separator, and can further increase the transport rate of active ions, thereby effectively reducing resistance and extending the service life of the secondary battery. Illustratively, the specific surface area of the filler may be 40 $m^2$/g, 50 $m^2$/g, 60 $m^2$/g, 70 $m^2$/g, 80 $m^2$/g, 100 $m^2$/g, 110 $m^2$/g, 120 $m^2$/g, 130 $m^2$/g, 140 $m^2$/g, 150 $m^2$/g, or a range consisting of any two of the foregoing numerical values.

In the embodiments of the present application, the specific surface area of the material has a meaning well known in the art, is generally expressed in $m^2$/g, and can be tested by using methods and instruments known in the art. For example, the specific surface area can be tested by the analysis and test method of specific surface area by inert gas (such as nitrogen) adsorption with reference to GB/T 19587-2017 and calculated by the Brunauer Emmett Teller (BET) method. The analysis and test method of specific surface area by nitrogen adsorption can be performed by using a Tri-Star model 3020 specific surface area and pore size analyzer from Micromeritics, USA.

In some embodiments, the volume distribution particle size Dv50 of the filler is 0.01 $\mu$m to 3 $\mu$m, and optionally 0.05 $\mu$m to 2 $\mu$m.

When the volume distribution particle size Dv50 of the filler is within the above range, it is more conducive to the uniform dispersion of the filler in the coating. Illustratively, the volume distribution particle size of the filler may be 0.01 $\mu$m, 0.02 $\mu$m, 0.03 $\mu$m, 0.05 $\mu$m, 0.10 $\mu$m, 0.12 $\mu$m, 0.15 $\mu$m, 0.20 $\mu$m, 0.30 $\mu$m, 0.50 $\mu$m, 0.60 $\mu$m, 0.80 $\mu$m, 1.00 $\mu$m, 1.20 $\mu$m, 1.50 $\mu$m, 1.80 $\mu$m, 2.00 $\mu$m, 2.50 $\mu$m, 2.80 $\mu$m, 3.00 $\mu$m, or a range consisting of any two of the foregoing numerical values.

In the embodiments of the present application, the Dv50 of the filler indicates the corresponding particle size at which the cumulative volume distribution percentage of the material reaches 50%, and can be tested by using methods known in the art. For example, it may be determined by using a laser particle size analyzer (such as Malvern Master Size 3000) with reference to the standard GB/T 19077.1-2016.

In some embodiments, the filler includes at least one of metal-organic frameworks and mineral materials.

Illustratively, the metal-organic frameworks include one or more of isoreticular metal-organic frameworks (isoreticular MOFs, IRMOFs), zeolite-imidazolate frameworks (ZIFs), materials of Institute Lavoisier (MILs), pocket-channel frameworks (PCNs), coordinational pillared layers (CPLs), and university of oslo (UiOs). The above materials have a through-hole structure, which is conducive to improving the liquid absorption and retention capacities.

Illustratively, the mineral materials include one or more of halloysite nanotubes, vermiculite (VRM), attapulgite (ATP), sepiolite (SEP), montmorillonite (MMT), hectorite (LRD), kaolinite, diatomite (72% $SiO_2$), and hydroxylapatite. Optionally, the mineral materials include halloysite nanotubes, which have a through-hole structure.

Vermiculite is a monoclinic layered silicate mineral, and the ideal molecular formula thereof is $Mg_{0.5}(H_2O)_4\{Mg_3[AlSi_3O_{10}](OH)_2\}$.

Attapulgite, also known as palygorskite, is a hydrous magnesium aluminosilicate clay mineral with a chainlayered structure, and the ideal molecular formula thereof is $Mg_5Si_8O_{20}(OH)_2(OH_2)_4 \cdot 4H_2O$.

Sepiolite is a fibrous hydrated magnesium silicate clay mineral, and the ideal molecular formula thereof is $H_8Mg_2O_{10}Si_3$.

Montmorillonite is a layered mineral composed of hydrous aluminosilicate and the main component of bentonite, and the ideal molecular formula thereof is $(Na,Ca)_{0.33}(Al,Mg)_2[Si_4O_{10}](OH)_2 \cdot nH_2O$.

Hectorite is a trioctahedral layered lithium magnesium silicate mineral, and the ideal molecular formula thereof is $Li_2Mg_2O_9Si_3$.

Kaolinite is a layered silicate mineral, and the ideal molecular formula thereof is $(Al_4Si_4O_{10}(OH)_8)$.

Diatomite is a siliceous rock, and the main chemical composition thereof is silicon dioxide $SiO_2$ (whose percentage content is more than 70%).

Halloysite nanotubes (HNTs) are silicate clay minerals, and the ideal molecular formula thereof is $Al_2Si_2O_5(OH)_4 \cdot nH_2O$. The halloysite nanotubes are inorganic nanotubes with high mechanical strength, good thermal stability, and large specific area. The halloysite nanotubes have strong dispersibility in polymers or water, and are easy to uniformly disperse in the coating.

The composition of halloysite nanotubes differs between the inner and outer surfaces. The inner surfaces of the tube cavities of the halloysite nanotubes consist of Al-OH groups, while the outer surfaces of the halloysite nanotubes consist of Si-O-Si groups. The inner and outer surfaces of the tube cavities of HNTs carry positive charges and negative charges respectively. Hydrogen bonding is formed between the abundant hydroxyl on the inner surfaces of the tube cavities and the small molecule organic solvent in the liquid electrolyte, thereby effectively improving the liquid absorption capacity of the separator. The hollow tubular structure of the halloysite nanotubes can store the electrolytic solution, improve the liquid retention capacity of the separator, and increase the capacity retention rate of the separator. In addition, the pore passage structure can improve the transport performance of active ions, thereby effectively reducing resistance and extending the service life of the secondary battery.

In some embodiments, the tube thickness of the halloysite nanotubes is H in nm, where $2 \leq H \leq 10$; and optionally, $2 \leq H \leq 5$. Illustratively, the tube thickness of the halloysite nanotubes may be 2 nm, 3 nm, 5 nm, 7 nm, 8 nm, 9 nm, 10 nm, or a range consisting of any two of the foregoing numerical values.

In some embodiments, the tube length of the halloysite nanotubes is L in $\mu$m, where $0.05 \leq L \leq 2.50$; and optionally, $0.15 \leq L \leq 1.50$. Illustratively, the tube length of the halloysite nanotubes may be 0.05 $\mu$m, 0.10 $\mu$m, 0.15 $\mu$m,

0.20 $\mu$m, 0.25 $\mu$m, 0.30 $\mu$m, 0.50 $\mu$m, 0.60 $\mu$m, 0.80 $\mu$m, 1.00 $\mu$m, 1.20 $\mu$m, 1.30 $\mu$m, 1.50 $\mu$m, or a range consisting of any two of the foregoing numerical values.

When the tube thickness and/or the tube length of the halloysite nanotubes are within the above range, it is conducive to further improving the liquid absorption and retention capacities of the halloysite nanotubes, increasing the capacity retention rate of the separator, and enhancing the transport performance of active ions. Thus, the resistance is effectively reduced and the service life of the secondary battery is extended.

In some embodiments, the halloysite nanotubes themselves are in a hollow tubular structure and the tube walls of the halloysite nanotubes also have a pore structure. In other words, the pore structure of halloysite nanotubes includes two parts, one is the internal hollow structure, and the other is the pore structure on the tube walls. The structure of the above halloysite nanotubes is a combination of a through-hole structure and a three-dimensional pore structure, which may be more conducive to increasing the amount of the electrolytic solution entering the halloysite nanotubes and improving the liquid retention capacity of the halloysite nanotubes. In the embodiments of the present application, acid etching may be performed on the halloysite nanotubes to form a pore structure in the tube walls of the halloysite nanotubes. Illustratively, the halloysite nanotubes are added to an acidic solution, stirred at 50 °C to 80 °C for 20 min to 40 min, then washed to remove the acidic solution, and dried to obtain the etched halloysite nanotubes. In the embodiments of the present application, the acidic solution includes a mixture obtained by mixing hydrofluoric acid and other acid solutions at a ratio of 1:2, and the other acids include at least one of hydrochloric acid, sulfuric acid, nitric acid, and the like, with the hydrochloric acid being optional.

For example, 30 g of the halloysite nanotubes are weighed and added into 1 L of the acidic solution with the concentration of 1 mol/L. The mixture is stirred at 70 °C for 30 min, centrifugally washed with deionized water until the pH of the supernatant is neutral, and then dried in a vacuum oven at 100 °C for 2 h to obtain the etched halloysite nanotubes.

In some embodiments, the pore structure of the filler may include a through-hole structure or a three-dimensional pore structure. The three-dimensional pore structure means that parallel and/or intersecting pores are formed inside the filler. The through-hole structure or the three-dimensional pore structure is conducive to further improving the liquid absorption and retention capacities of the separator, and increasing the capacity retention rate of the separator. The through-hole structure refers to a hole penetrating the filler.

In some embodiments, the mass percentage content of the filler in the coating is greater than or equal to 10% and less than 100%; and optionally, 30% to 95%.

When the mass percentage content of the filler is within the above range, the overall liquid absorption and retention capacities of the separator can be improved, and the capacity retention rate of the separator is increased, facilitating an enhancement of the transport performance of active ions. Thus, the resistance is effectively reduced and the service life of the secondary battery is extended. Illustratively, the mass percentage content of the filler may be 10%, 20%, 30%, 40%, 50%, 60%, 70%, 80%, 90%, 95%, 96%, or a range consisting of any two of the foregoing numerical values.

In some embodiments, the thickness of the coating is $W_1$ in $\mu$m, where $W_1 \geq 0.3$; optionally, $W_1 \geq 0.5$; and further optionally, $0.5 \leq W_1 \leq 5.0$.

When the thickness of the coating is within the above range, the addition amount of the pore-structured filler is relatively high, which is conducive to improving the liquid absorption and retention capacities of the separator, increasing the capacity retention rate of the separator, and enhancing the transport performance of active ions, thereby effectively reducing resistance and extending the service life of the secondary battery. Illustratively, the thickness of the coating may be 0.3 $\mu$m, 0.4 $\mu$m, 0.5 $\mu$m, 0.8 $\mu$m, 1.0 $\mu$m, 1.2 $\mu$m, 1.5 $\mu$m, 2.0 $\mu$m, 3.0 $\mu$m, 4.0 $\mu$m, 5.0 $\mu$m, or a range consisting of any two of the foregoing numerical values.

In the present application, the coating thickness has a meaning well known in the art and can be detected by using devices and methods well known in the art. For example, the test can be performed by using a scanning electron microscope (e.g., ZEISS Sigma 300). As an example, the test can be performed according to the following steps: Firstly, a separator including the filler is cut into a sample to be tested with a certain size (e.g., 6 mm × 6 mm), the sample to be tested is interposed between two electrically and thermally conductive sheets (such as copper foils), the sample to be tested and the sheets are stuck and fixed with an adhesive (such as a double-sided adhesive tape) and pressed with a flat iron block of a certain mass (such as about 400 g) for a certain period of time (such as 1 h) to make the gap between the sample to be tested and the copper foils as small as possible, then the edges are trimmed neatly with scissors, and the sample is stuck to a sample stage with a conductive adhesive, with the sample slightly protruding from the edge of the sample stage. Then, the sample stage is placed into a sample holder and locked in place, and an argon ion cross-section polisher (e.g., IB-19500CP) is turned on and evacuated (e.g., 10 Pa-4 Pa). After setting the argon flow (e.g., 0.15 MPa), voltage (e.g., 8 KV), and polishing time (e.g., 2 h), the sample stage is adjusted to an oscillation mode to start polishing. After the polishing is finished, the ion-polished cross-sectional morphology (CP) image of the sample to be tested is obtained by using a scanning electron microscope (e.g., ZEISS Sigma 300).

To further improve the heat resistance of the separator, in some embodiments, the coating may further include a heat-resistant filler.

In some embodiments, the porosity of the heat-resistant filler is less than 15%; further optionally, less than 10%;

still further optionally, less than 5%; and yet further optionally, less than or equal to 3%; even the porosity of the heat-resistant filler may be 0%, which means that the interior of the heat-resistant particle is essentially free of porous structures.

In some embodiments, the coating further includes a heat-resistant filler. The average pore size of the heat-resistant filler is less than or equal to 0.5 nm. The average pore size of the above heat-resistant filler is relatively small, which is conducive to enhancing the mechanical strength of the heat-resistant filler and improving the overall mechanical properties of the separator. In addition, the heat-resistant filler mainly plays a role in heat resistance and has a limited effect on improving the liquid absorption and retention capacities of the separator. Illustratively, the average pore size of the heat-resistant filler may be 0, 0.1 nm, 0.2 nm, 0.3 nm, 0.4 nm, 0.5 nm, or a range consisting of any two of the foregoing numerical values. The average pore size of the heat-resistant filler is 0, indicating that the heat-resistant filler is in a solid structure and essentially free of porous structures.

In some embodiments, the mass percentage content of the heat-resistant filler in the coating is denoted as A, and the mass percentage content of the pore-structured filler in the coating is denoted as B, where $0.1 \leq A/B \leq 10$. When the separator satisfies the above range, both the heat resistance and the liquid retention capacity of the separator can be improved.

Illustratively, A/B may be 0.1, 0.2, 0.5, 0.8, 1.0, 1.2, 1.5, 2.0, 2.5, 3.0, 3.5, 4.0, 4.5, 5.0, 5.5, 6, 6.5, 7, 8, 9, 10, or a range consisting of any two of the foregoing numerical values.

In some embodiments, the mass percentage content of the heat-resistant filler in the coating is less than or equal to 85%; and optionally, 30% to 65%.

Illustratively, the mass percentage content of the heat-resistant filler may be 1%, 2%, 3%, 4%, 5%, 6%, 7%, 8%, 9%, 10%, 15%, 20%, 25%, 30%, 40%, 55%, 70%, 80%, 85%, or a range consisting of any two of the foregoing numerical values.

In some embodiments, the heat-resistant filler includes at least one of inorganic particles and organic particles.

In some embodiments, the inorganic particles may include at least one of inorganic particles having a dielectric constant of 5 or more, inorganic particles having the ability to transport active ions, and inorganic particles capable of undergoing electrochemical oxidation and reduction.

In some embodiments, the inorganic particles having a dielectric constant of 5 or more may include at least one of boehmite ($\gamma$-AlOOH), aluminum oxide ($Al_2O_3$), barium sulfate ($BaSO_4$), magnesium oxide (MgO), magnesium hydroxide ($Mg(OH)_2$), a silicon-oxygen compound $SiO_x$ ($0 < x \leq 2$), tin dioxide ($SnO_2$), titanium oxide ($TiO_2$), calcium oxide (CaO), zinc oxide (ZnO), zirconium oxide ($ZrO_2$), yttrium oxide ($Y_2O_3$), nickel oxide (NiO), hafnium dioxide ($HfO_2$), cerium oxide ($CeO_2$), zirconium titanate ($ZrTiO_3$), barium titanate ($BaTiO_3$), magnesium fluoride ($MgF_2$), $Pb(Zr,Ti)O_3$ (abbreviated as PZT), $Pb_{1-m}La_mZr_{1-n}Ti_nO_3$ (abbreviated as PLZT, $0 < m < 1$, $0 < n < 1$), and $Pb(Mg_3Nb_{2/3})O_3$-$PbTiO_3$ (abbreviated as PMN-PT).

In some embodiments, the inorganic particles having the ability to transport active ions may include at least one of lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), $(LiAlTiP)_xO_y$ type glass ($0 < x < 4$, $0 < y < 13$), lithium lanthanum titanate ($Li_xLa_yTiO_3$, $0 < x < 2$, $0 < y < 3$), lithium germanium thiophosphate ($Li_xGe_yP_zS_w$, $0 < x < 4$, $0 < y < 1$, $0 < z < 1$, $0 < w < 5$), lithium nitride ($Li_xN_y$, $0 < x < 4$, $0 < y < 2$), $SiS_2$ type glass ($Li_xSi_yS_z$, $0 < x < 3$, $0 < y < 2$, $0 < z < 4$), and $P_2S_5$ type glass ($Li_xP_yS_z$, $0 < x < 3$, $0 < y < 0 < z < 7$).

In some embodiments, the inorganic particles capable of undergoing electrochemical oxidation and reduction may include at least one of a lithium-containing transition metal oxide, a lithium-containing phosphate with an olivine structure, a carbon-based material, a silicon-based material, a tin-based material, and a lithium titanium compound.

In some embodiments, the ratio of the mass percentage content of the heat-resistant filler in the coating to the mass percentage content of the pore-structured filler described above in the coating is 0.1 to 10.0; and optionally, 1.00 to 5.0.

When the addition amounts of the heat-resistant filler and the pore-structured are within the above range, both the heat resistance of the separator and the ability to transport active ions may be improved, which helps to further extend the service life of the secondary battery. Illustratively, the ratio of the mass percentage content of the heat-resistant filler in the coating to the mass percentage content of the pore-structured in the coating may be 0.1, 0.5, 1, 1.2, 1.5, 2.0, 2.5, 3.0, 3.5, 4.0, 5.0, 6.0, 7.0, 8.0, 9.0, 10, or a range consisting of any two of the foregoing numerical values.

In some embodiments, the organic particles may include at least one of polystyrene, polyethylene, polyimide, melamine resin, phenolic resin, polypropylene, polyesters (e.g., polyethylene terephthalate, polyethylene naphthalate, and polybutylene terephthalate), polyphenylene sulfide, polyaramide, polyamideimide, polyimide, a copolymer of butyl acrylate and ethyl methacrylate, and a mixture thereof.

The coating in the embodiments of the present application may be a single-layer structure or a multi-layer structure. In some embodiments, the coating includes at least two sub-coatings. The filler and the heat-resistant inorganic particles are arranged in different sub-coatings. The filler and the heat-resistant inorganic particles are separately arranged in different layers, which is beneficial for the heat-resistant inorganic particles and the filler to play their respective roles, thereby improving the overall heat resistance, and liquid absorption and retention capacities of the separator. In other embodiments, the coating includes at least two sub-coatings. Each sub-coating may include the filler and the heat-resistant inorganic particles.

In some embodiments, the coating includes a binder. Optionally, the binder includes one or more of polyacrylate, acrylic acid, carboxymethyl cellulose, polyvinylidene fluoride-co-trichloroethylene copolymer, polymethyl methacrylate, polyvinylpyrrolidone, polyvinyl acetate, polyethylene-co-vinyl acetate copolymer, polyethylene oxide, polyarylate, cellulose acetate, cellulose acetate butyrate, cellulose acetate propionate, polyvinylidene fluoride, polyacrylonitrile, polyvinyl alcohol, starch, hydroxypropyl cellulose, regenerated cellulose, tetrafluoroethylene, polyethylene, polypropylene, and cyanoethyl amylopectin.

According to the embodiments of the present application, through the differentiated arrangement of the first porous base film and the second porous base film, the liquid retention capacity, the mechanical properties, and the like of the separator may be improved, helping to further improve the capacity retention rate of the secondary battery.

In some embodiments, the melting point of the first porous base film is less than or equal to the melting point of the second porous base film.

In some embodiments, the ratio of the average pore size of the first porous base film to the average pore size of the second porous base film is greater than 1; and optionally, greater than or equal to 1.05. Illustratively, the ratio of the average pore size of the first porous base film to the average pore size of the second porous base film may be 1.01, 1.02, 1.05, 1.1, 1.5, 2.0, 3, 5, 10, or a range consisting of any two of the foregoing numerical values.

In some embodiments, the average pore size of the first porous base film is 0.1 $\mu$m to 2 $\mu$m; and more optionally, 0.1 $\mu$m to 0.5 $\mu$m.

In some embodiments, the average pore size of the second porous base film is 0.1 $\mu$m to 2 $\mu$m; and more optionally, 0.1 $\mu$m to 0.35 $\mu$m.

In some embodiments, the porosity of the first porous base film is $P_1$, and the porosity of the second porous base film is $P_2$, where $P_1/P_2 \geq 1.02$; and optionally, $1.05 \leq P_1/P_2 \leq 2.50$. When the porosity is within the above range, the air permeability of the base film can be ensured to facilitate the migration of active ions, and due to a relatively low porosity, the mechanical properties of the base film can be ensured, thereby providing good support for the coating. Illustratively, $P_1/P_2$ may be 1.02, 1.03, 1.05, 1.50, 2.0, 2.50, or a range consisting of any two of the foregoing numerical values.

In some embodiments, $30\% \leq P_1 \leq 80\%$; optionally, $35\% \leq P_1 \leq 50\%$. Illustratively, the porosity of the first porous base film may be 30%, 35%, 40%, 45%, 50%, 60%, 70%, 80%, or a range consisting of any two of the foregoing numerical values.

In some embodiments, $25\% \leq P_2 \leq 70\%$; optionally, $35\% \leq P_2 \leq 45\%$. Illustratively, the porosity of the second porous base film may be 30%, 35%, 40%, 45%, 50%, 60%, 70%, or a range consisting of any two of the foregoing numerical values.

In some embodiments, the ratio of the thickness of the first porous base film to the thickness of the second porous base film is greater than or equal to 1.02; and optionally, 1.2 to 5.0.

The first porous base film differs from the second porous base film in thickness, as described above, and in mechanical properties. The first porous base film has greater mechanical strength, which is more conducive to alleviating the risk of dendrites piercing the first porous base film. The first porous base film may be disposed proximal to the negative electrode plate, thereby facilitating an improvement in the reliability of the secondary battery. Illustratively, $W_2/W_3$ may be 1.02, 1.05, 1.20, 1.50, 1.80, 2.00, 2.20, 2.30, 2.50, 3.00, 3.50, 4.00, 4.50, 5.00, or a range consisting of any two of the foregoing numerical values.

In some embodiments, the thickness of the first porous base film is 1 $\mu$m to 12 $\mu$m; and optionally, 3 $\mu$m to 6 $\mu$m. Specifically, the thickness of the first porous base film may be 1 $\mu$m, 2 $\mu$m, 3 $\mu$m, 5 $\mu$m, 6 $\mu$m, 8 $\mu$m, 10 $\mu$m, 11 $\mu$m, 12 $\mu$m, or a range consisting of any two of the foregoing numerical values.

In some embodiments, the thickness of the second porous base film is 2 $\mu$m to 12 $\mu$m; and optionally, 3 $\mu$m to 5 $\mu$m.

Specifically, the thickness of the second porous base film may be 2 $\mu$m, 2.5 $\mu$m, 3 $\mu$m, 4 $\mu$m, 5 $\mu$m, 6 $\mu$m, 8 $\mu$m, 10 $\mu$m, 11 $\mu$m, 12 $\mu$m, or a range consisting of any two of the foregoing numerical values.

In some embodiments, the ion conductivity of the first porous base film is greater than the ion conductivity of the second porous base film.

In some embodiments, the ion conductivity of the first porous base film is 0.5 *MS/cm* to 1.5 *MS/cm;* and optionally, 0.7 *MS/cm* to 1.3 *MS/cm.*

In some embodiments, the ion conductivity of the second porous base film is 0.4 *MS/cm* to 1.5 *MS/cm;* and optionally, 0.6 *MS/cm* to 1.3 *MS/cm.*

The embodiments of the present application do not particularly limit the materials of the base films, and any base film well known to have good chemical stability and mechanical stability may be selected and used. For example, the first porous base film and the second porous base film may independently include at least one of a porous polyolefin-based resin film (e.g., at least one of polyethylene, polypropylene, polytetrafluoroethylene, polyvinyl fluoride, and polyvinylidene fluoride), a porous glass fiber, and a porous non-woven fabric. The first porous base film and the second porous base film may be independently selected from a single-layer film or a multi-layer composite film. When the first porous base film is a multi-layer composite film, the materials of the layers may be the same or different. When the second porous base film is a multi-layer composite film, the materials of the layers may be the same or different.

In some embodiments, the separator may further include an adhesive layer. The adhesive layer is disposed between the coating and the base film (e.g., between the coating and the first porous base film, and/or between the coating and the second porous base film). The adhesive layer includes a first binder. The adhesive layer can prevent the coating from falling off, and improve the adhesion between the coating and the base film and the safety performance of the secondary battery. In addition, the adhesive layer can improve the interface of the separator and the electrode and improve the cycle performance of the secondary battery.

Optionally, the first binder includes at least one of an acrylate monomer homopolymer or copolymer, an acrylic monomer homopolymer or copolymer, and a fluorinated olefin monomer homopolymer or copolymer. The comonomer includes, but is not limited to, at least one of the following: an acrylate monomer, an acrylic monomer, an olefin monomer, a halogenated olefin monomer, a fluoroether monomer, and the like.

Optionally, the first binder includes a vinylidene fluoride-based polymer, for example, a homopolymer of a vinylidene fluoride monomer (VDF) and/or a copolymer of a vinylidene fluoride monomer and a comonomer. The comonomer may be at least one of an olefin monomer, a fluorinated olefin monomer, a chlorinated olefin monomer, an acrylate monomer, an acrylic monomer, and a fluoroether monomer. Optionally, the comonomer may include at least one of: trifluoroethylene (VF3), chlorotrifluoroethylene (CTFE), 1,2-difluoroethylene, tetrafluoroethylene (TFE), hexafluoropropylene (HFP), perfluoro(alkyl vinyl)ether (e.g. perfluoro(methyl vinyl)ether PMVE, perfluoro(ethyl vinyl)ether PEVE, perfluoro(propyl vinyl)ether PPVE), perfluoro(1,3-dioxole), and perfluoro(2,2-dimethyl-1,3-dioxole) (PDD).

In some embodiments, the liquid absorption rate of the separator is 80% to 180%. Illustratively, the liquid absorption rate of the separator may be 80%, 90%, 100%, 120%, 130%, 140%, 150%, 160%, 170%, 180%, or a range consisting of any two of the foregoing numerical values.

In the embodiments of the present application, the method for testing the liquid absorption rate of the separator is as follows: Firstly, the separator is cut into a specified size (e.g., 1 cm × 1 cm), and the mass $m_0$ of the separator before being infiltrated in an electrolytic solution (a standard electrolytic solution, for example, the electrolytic solution of the embodiments of the present application may be used) is weighed; then, the separator is infiltrated in the electrolytic solution for 24 h and taken out, the electrolytic solution on the surface of the separator is removed by using a clean filter paper, and the mass $m_l$ of the separator is weighed; the liquid absorption of the separator is: $W = m_l - m_0$, and the calculation formula of the liquid absorption rate of the separator is:

$$\text{liquid absorption rate of the separator} = \frac{m1 - m0}{m0} \times 100\%.$$

## Preparation Method

In a second aspect, the embodiments of the present application provide a method for preparing a separator. The method can be used to prepare the separator according to any one of the embodiments of the first aspect of the embodiments of the present application.

The method includes the following steps:

providing a first porous base film;

providing a coating including a filler on the surface of the first porous base film, the filler having a pore structure; and

providing a second porous base film on the surface of the coating distal to the first porous base film to prepare the separator.

In some embodiments, the coating may be formed by applying a coating slurry onto the surface of the first porous base film and solidifying the coating slurry. The coating slurry may include a solvent. The solvent may be water, for example, deionized water.

In some embodiments, the coating slurry may further include other components, for example, a dispersant, a wetting agent, a binder, and the like.

In some embodiments, the coating is performed by using a coater. The embodiments of the present application do not particularly limit the type of the coater. For example, a commercially available coater may be used. The coater includes a gravure roller. The gravure roller is used to transfer the slurry to a substrate.

In some embodiments, transfer coating, rotary spray coating, dip coating, and the like may be used as the coating method.

For some raw materials used in the method for preparing a separator according to the embodiments of the present application and their content and other parameters, reference can be made to the separator of the first aspect of the embodiments of the present application, and the details will not be repeated here.

Unless otherwise specified, all raw materials used in the method for preparing a separator according to the embodiments of the present application are commercially available.

## Secondary Battery

In a third aspect, the embodiments of the present application further provide a secondary battery.

Secondary batteries, also known as rechargeable batteries or storage batteries, refer to batteries that can continue to be used by reactivating their active materials through charging after discharging. In general, a secondary battery includes an electrode assembly and an electrolytic solution. The electrode assembly includes a positive electrode plate, a negative electrode plate, and a separator. The separator is disposed between the positive electrode plate and the negative electrode plate to primarily prevent the positive electrode and the negative electrode from short-circuiting while allowing active ions to pass through.

The embodiments of the present application do not particularly limit the type of the secondary battery. For example, the secondary battery may be a lithium-ion battery, a sodium-ion battery, or the like. Particularly, the secondary battery may be a lithium-ion secondary battery.

The secondary battery according to the embodiments of the present application includes the separator according to any one of the embodiments of the first aspect of the embodiments of the present application or the separator prepared by the method according to any one of the embodiments of the second aspect of the embodiments of the present application, and the separator is disposed between the positive electrode plate and the negative electrode plate.

[Positive Electrode Plate]

In some embodiments, the positive electrode plate includes a positive electrode current collector and a positive electrode film layer disposed on at least one surface of the positive electrode current collector and including a positive electrode active material. For example, the positive electrode current collector is provided with two surfaces opposite to each other in its own thickness direction, and the positive electrode film layer is disposed on any one or both of the two opposite surfaces of the positive electrode current collector.

When the secondary battery according to the embodiments of the present application is a lithium-ion battery, the positive electrode active material may include, but is not limited to, at least one of a lithium-containing transition metal oxide, a lithium-containing phosphate, and respective modified compounds thereof. Examples of the lithium transition metal oxide may include, but are not limited to, at least one of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, and respective modified compounds thereof. Examples of the lithium-containing phosphate may include, but are not limited to, at least one of lithium iron phosphate, a composite material of lithium iron phosphate and carbon, lithium manganese phosphate, a composite material of lithium manganese phosphate and carbon, lithium iron manganese phosphate, a composite material of lithium iron manganese phosphate and carbon, and respective modified compounds thereof.

In some embodiments, in order to further improve the energy density of the secondary battery, the positive electrode active material of the lithium-ion battery may include at least one of a lithium transition metal oxide with the general formula $Li_aNi_bCo_cM_dO_eA_f$ and modified compounds thereof, where $0.8 \leq a \leq 1.2$, $0.5 \leq b < 1$, $0 < c < 1$, $0 < d < 1$, $1 \leq e \leq 2$, $0 \leq f \leq 1$, M includes at least one of Mn, Al, Zr, Zn, Cu, Cr, Mg, Fe, V, Ti, and B, and A includes at least one of N, F, S, and Cl.

As an example, the positive electrode active material of the lithium-ion battery may include at least one of $LiCoO_2$, $LiNiO_2$, $LiMnO_2$, $LiMn_2O_4$, $LiNi_{1/3}Co_{1/3}Mn_{1/3}O_2$ (NCM333), $LiNi_{0.5}Co_{0.2}Mn_{0.3}O_2$ (NCM523), $LiNi_{0.6}Co_{0.2}Mn_{0.2}O_2$ (NCM622), $LiNi_{0.8}Co_{0.1}Mn_{0.1}O_2$ (NCM811), $LiNi_{0.85}Co_{0.15}Al_{0.05}O_2$, $LiFePO_4$, and $LiMnPO_4$.

When the secondary battery according to the embodiments of the present application is a sodium-ion battery, the positive electrode active material may include, but is not limited to, at least one of a sodium-containing transition metal oxide, a polyanionic material (such as phosphates, fluorophosphates, pyrophosphates, and sulfates), and a Prussian blue-type material.

As an example, the positive electrode active material of the sodium-ion battery may include at least one of $NaFeO_2$, $NaCoO_2$, $NaCrO_2$, $NaMnO_2$, $NaNiO_2$, $NaNi_{1/2}Ti_{1/2}O_2$, $NaNi_{1/2}Mn_{1/2}O_2$, $Na_{2/3}Fe_{1/3}Mn_{2/3}O_2$, $NaNi_{1/3}Co_{1/3}Mn_{1/3}O_2$, $NaFePO_4$, $NaMnPO_4$, $NaCoPO_4$, a Prussian blue-type material, and a material with the general formula $X_pM'_q(PO_4)_rO_xY_{3-x}$. In the general formula $X_pM'_q(PO_4)_rO_xY_{3-x}$, $0 < p \leq 4$, $0 < q \leq 2$, $1 \leq r \leq 3$, $0 \leq x \leq 2$, X includes at least one of $H^+$, $Li^+$, $Na^+$, $K^+$, and $NH_4^+$, M' is a transition metal cation, optionally at least one of V, Ti, Mn, Fe, Co, Ni, Cu, and Zn, and Y is a halogen anion, optionally at least one of F, Cl, and Br.

In the embodiments of the present application, the modified compounds of the above positive electrode active materials may be obtained by doping modification and/or surface-coating modification of the positive electrode active materials.

In some embodiments, the positive electrode film layer further optionally includes a positive electrode conductive agent. The embodiments of the present application do not particularly limit the type of the positive electrode conductive agent. As an example, the positive electrode conductive agent includes at least one of superconducting carbon, conductive graphite, acetylene black, carbon black, Ketjen black, a carbon dot, a carbon nanotube, graphene, and a carbon nanofiber. In some embodiments, the mass percentage content of the positive electrode conductive agent is $\leq 5\%$, based on the total mass of the positive electrode film layer.

In some embodiments, the positive electrode film layer further optionally includes a positive electrode binder. The embodiments of the present application do not particularly limit the type of the positive electrode binder. As an example, the positive electrode binder may include at least one of polyvinylidene fluoride (PVDF), polytetrafluoroethylene (PTFE), vinylidene fluoride-tetrafluoroethylene-propylene terpolymer, vinylidene fluoridehexafluoropropylene-tetrafluoroethylene terpolymer, tetrafluoroethylene-hexafluoropropylene copolymer, and fluorinated acrylate resin. In some embodiments, the mass percentage content of the positive electrode binder is $\leq 5\%$, based on the total mass of the positive electrode film layer.

In some embodiments, a metal foil or a composite current collector may be used as the positive electrode current collector. As an example of the metal foil, an aluminum foil may be used. The composite current collector may include a polymer material substrate and a metal material layer formed on at least one surface of the polymer material substrate. As an example, the metal material may include at least one of aluminum, an aluminum alloy, nickel, a nickel alloy, titanium, a titanium alloy, silver, and a silver alloy. As an example, the polymer material substrate may include at least one of polypropylene (PP), polyethylene terephthalate (PET), polybutylene terephthalate (PBT), polystyrene (PS), and polyethylene (PE).

The positive electrode film layer is generally formed by applying a positive electrode slurry onto a positive electrode current collector, drying, and cold pressing. The positive electrode slurry is generally formed by dispersing the positive electrode active material, an optional conductive agent, an optional binder, and any other components in a solvent and stirring them uniformly. The solvent may be N-methylpyrrolidone (NMP), but is not limited thereto.

[Negative Electrode Plate]

In some embodiments, the negative electrode plate includes a negative electrode current collector and a negative electrode film layer disposed on at least one surface of the negative electrode current collector and including a negative electrode active material. For example, the negative electrode current collector is provided with two surfaces opposite to each other in its own thickness direction, and the negative electrode film layer is disposed on any one or both of the two opposite surfaces of the negative electrode current collector.

Any negative electrode active material for secondary batteries well known in the art may be used as the negative electrode active material. As an example, the negative electrode active material may include, but is not limited to, at least one of natural graphite, artificial graphite, soft carbon, hard carbon, a silicon-based material, a tin-based material, and lithium titanate. The silicon-based material may include at least one of elemental silicon, an oxide of silicon, a silicon-carbon composite, a silicon-nitrogen composite, and a silicon alloy material. The tin-based material may include at least one of elemental tin, an oxide of tin, and a tin alloy material.

In some embodiments, the negative electrode film layer further optionally includes a negative electrode conductive agent. The embodiments of the present application do not particularly limit the type of the negative electrode conductive agent. As an example, the negative electrode conductive agent may include at least one of superconducting carbon, conductive graphite, acetylene black, carbon black, Ketjen black, a carbon dot, a carbon nanotube, graphene, and a carbon nanofiber. In some embodiments, the mass percentage content of the negative electrode conductive agent is $\leq 5\%$, based on the total mass of the negative electrode film layer.

In some embodiments, the negative electrode film layer further optionally includes a negative electrode binder. The embodiments of the present application do not particularly limit the type of the negative electrode binder. As an example, the negative electrode binder may include at least one of styrene-butadiene rubber (SBR), watersoluble unsaturated resin SR-1B, aqueous acrylic resin (e.g., polyacrylic acid PAA, polymethacrylic acid PMAA, or sodium polyacrylate PAAS), polyacrylamide (PAM), polyvinyl alcohol (PVA), sodium alginate (SA), and carboxymethyl chitosan (CMCS). In some embodiments, the mass percentage content of the negative electrode binder is $\leq 5\%$, based on the total mass of the negative electrode film layer.

In some embodiments, the negative electrode film layer further optionally includes other auxiliary agents. As an example, other auxiliary agents may include a thickener, for example, sodium carboxymethylcellulose (CMC) or a PTC thermistor material. In some embodiments, the mass percentage content of the other auxiliary agents is $\leq 2\%$, based on the total mass of the negative electrode film layer.

In some embodiments, a metal foil or a composite current collector may be used as the negative electrode current collector. As an example of the metal foil, a copper foil may be used. The composite current collector may include a polymer material substrate and a metal material layer formed on at least one surface of the polymer material substrate. As an example, the metal material may include at least one of copper, a copper alloy, nickel, a nickel alloy, titanium, a titanium alloy, silver, and a silver alloy. As an example, the polymer material substrate may include at least one of polypropylene (PP), polyethylene terephthalate (PET), polybutylene terephthalate (PBT), polystyrene (PS), and polyethylene (PE).

The negative electrode film layer is generally formed by applying a negative electrode slurry onto a negative electrode current collector, drying, and cold pressing. The negative electrode slurry is generally formed by dispersing the negative electrode active material, an optional conductive agent, an optional binder, and other optional auxiliary agents in a solvent and stirring them uniformly. The solvent may be N-methylpyrrolidone (NMP) or deionized water, but is not limited thereto.

The negative electrode plate does not exclude additional functional layers other than the negative electrode film layer. For example, in some embodiments, the negative electrode plate according to the embodiments of the present application further includes a conductive bottom coating (e.g., composed of a conductive agent and a binder) interposed between the negative electrode current collector and the negative electrode film layer and disposed on the surface of the negative electrode current collector. In other embodiments, the negative electrode plate according to the embodiments of the present application further includes a protective layer covering the surface of the negative electrode film layer.

[Electrolytic Solution]

During the charging and discharging process of the secondary battery, active ions are intercalated and deintercalated back and forth between the positive electrode plate and the negative electrode plate, and the electrolytic solution plays a role in conducting the active ions between the positive electrode plate and the negative electrode plate. The embodiments of the present application do not particularly limit the type of the electrolytic solution, and a choice can be made as needed in practice.

The electrolytic solution includes an electrolyte salt and a solvent. The types of the electrolyte salt and the solvent are not particularly limited, and a choice can be made as needed in practice.

When the secondary battery according to the embodiments of the present application is a lithium-ion battery, as an example, the electrolyte salt may include, but is not limited to, at least one of lithium hexafluorophosphate ($LiPF_6$), lithium tetrafluoroborate ($LiBF_4$), lithium perchlorate ($LiClO_4$), lithium hexafluoroarsenate ($LiAsF_6$), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalate)borate (LiBOB), lithium difluorophosphate ($LiPO_2F_2$), lithium difluorobis(oxalato)phosphate (LiDFOP), and lithium tetrafluoro(oxalato)phosphate (LiTFOP).

When the secondary battery according to the embodiments of the present application is a sodium-ion battery, as an example, the electrolyte salt may include, but is not limited to, at least one of sodium hexafluorophosphate ($NaPF_6$), sodium tetrafluoroborate ($NaBF_4$), sodium perchlorate ($NaClO_4$), sodium hexafluoroarsenate ($NaAsF_6$), sodium bis(fluorosulfonyl)imide (NaFSI), sodium bis(trifluoromethanesulfonyl)imide (NaTFSI), sodium trifluoromethanesulfonate (NaTFS), sodium difluoro(oxalato)borate (NaDFOB), sodium bis(oxalate)borate (NaBOB), sodium difluorophosphate ($NaPO_2F_2$), sodium difluorobis(oxalato)phosphate (NaDFOP), and sodium tetrafluoro(oxalato)phosphate (NaTFOP).

As an example, the solvent may include, but is not limited to, at least one of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), and diethyl sulfone (ESE).

In some embodiments, the electrolytic solution further optionally includes an additive. For example, the additive may include a negative electrode film-forming additive, or may include a positive electrode film-forming additive, or may include an additive capable of improving certain properties of the battery, for example, an additive for improving the overcharge performance of the battery, an additive for improving the high-temperature performance of the battery, or an additive for improving the low-temperature power performance of the battery.

In some embodiments, the positive electrode plate, the separator, and the negative electrode plate may be manufactured into an electrode assembly through a winding process and/or a stacking process.

In some embodiments, the secondary battery may include an outer packaging. The outer packaging can be used for packaging the electrode assembly and the electrolytic solution described above.

In some embodiments, the outer packaging of the secondary battery may be a hard shell, for example, a hard plastic shell, an aluminum shell, or a steel shell. The outer packaging of the secondary battery may also be a soft pack, for example, a pouch-type soft pack. The soft pack may be made of plastic, such as at least one of polypropylene (PP), polybutylene terephthalate (PBT), and polybutylene succinate (PBS).

**EP 4 693 693 A1**

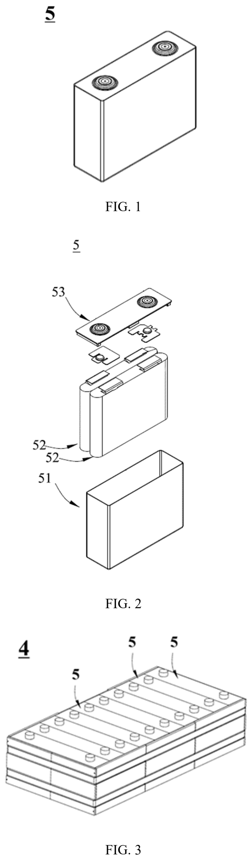

The embodiments of the present application do not particularly limit the shape of the secondary battery, and it may have a cylindrical shape, a square shape, or any other shape. For example, FIG. 1 shows a secondary battery 5 having a square structure as one example.

In some embodiments, as shown in FIG. 2, the outer packaging may include a housing 51 and a cover plate 53. The housing 51 may include a bottom plate and side plates connected to the bottom plate, and the bottom plate and the side plates define, in an enclosing manner, an accommodating cavity. The housing 51 is provided with an opening communicating with the accommodating cavity, and the cover plate 53 is configured to lid the opening to close the accommodating cavity. The positive electrode plate, the negative electrode plate, and the separator may be subjected to a winding process and/or a stacking process to form an electrode assembly 52. The electrode assembly 52 is packaged in the accommodating cavity. The electrolytic solution is infiltrated into the electrode assembly 52. The number of electrode assemblies 52 included in the secondary battery 5 may be one or more and may be adjusted as needed.

The method for preparing the secondary battery according to the embodiments of the present application is well known. In some embodiments, the positive electrode plate, the separator, the negative electrode plate, and the electrolytic solution may be assembled to form the secondary battery. As an example, the secondary battery is obtained by subjecting the positive electrode plate, the separator, and the negative electrode plate to a winding process and/or a stacking process to form an electrode assembly, placing the electrode assembly in an outer packaging, injecting the electrolytic solution into the outer packaging after drying, and subjecting the outer packaging to vacuum packaging, standing, formation, shaping, and other procedures.

In some examples according to the embodiments of the present application, the secondary battery according to the embodiments of the present application may be assembled into a battery module. The number of secondary batteries included in the battery module may be more than one, and the specific number may be adjusted according to the application and capacity of the battery module.

FIG. 3 is a schematic diagram of a battery module 4 as one example. As shown in FIG. 3, in the battery module 4, a plurality of secondary batteries 5 may be disposed in sequence in a length direction of the battery module 4. Certainly, the arrangement may also be in any other manner. Further, the plurality of secondary batteries 5 may be fixed by a fastener.

Optionally, the battery module 4 may further include a shell having an accommodating space in which the plurality of secondary batteries 5 are accommodated.

In some embodiments, the above battery module may further be assembled into a battery pack; the number of battery modules included in the battery pack may be adjusted based on the application and capacity of the battery pack.

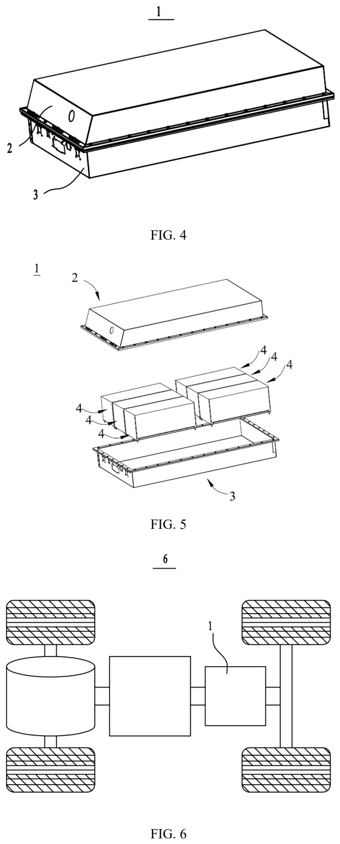

FIG. 4 and FIG. 5 are schematic diagrams of a battery pack 1 as one example. As shown in FIG. 4 and FIG. 5, the battery pack 1 may include a battery case and a plurality of battery modules 4 disposed in the battery case. The battery case includes an upper case body 2 and a lower case body 3. The upper case body 2 is configured to lid the lower case body 3 and form a closed space for accommodating the battery modules 4. The plurality of battery modules 4 may be arranged in any manner in the battery case.

In the embodiments of the present application, the battery includes one or a plurality of secondary batteries. In the case that the battery includes a plurality of secondary batteries, the battery may include a battery module or a battery pack.

## Electric Device

In a fourth aspect, the embodiments of the present application provide an electric device. The electric device includes at least one of the secondary battery, the battery module, or the battery pack according to the embodiments of the present embodiment. The secondary battery, the battery module, or the battery pack may be used as a power source for the electric device, and they may also be used as an energy storage unit for the electric device. The electric device may be, but is not limited to, a mobile device (e.g., a mobile phone or a laptop computer), an electric vehicle (e.g., a pure electric vehicle, a hybrid electric vehicle, a plug-in hybrid electric vehicle, an electric bicycle, an electric scooter, an electric golf cart, or an electric truck), an electric train, ship, or satellite, an energy storage system, or the like.

The secondary battery, the battery module, or the battery pack may be selected based on the use requirements of the electric device.

FIG. 6 is a schematic diagram of an electric device as one example. The electric device is a pure electric vehicle, a hybrid electric vehicle, a plug-in hybrid electric vehicle, or the like. To meet the requirements of the electric device for high power and high energy density of the battery, the battery pack or the battery module may be used.

As another example, the electric device may be a mobile phone, a tablet computer, a laptop computer, or the like. The electric device is generally required to be light and thin, and a secondary battery can thus be used as a power source.

## Examples

The following examples more specifically describe the content disclosed in the embodiments of the present application. These examples are intended for illustrative purposes only, since various modifications and changes within the scope of the content disclosed in the embodiments of the present application will be apparent to those skilled in the art. Unless otherwise stated, all parts, percentages, and ratios reported in the following examples are based on mass, and all reagents used in the examples are commercially available or synthesized according to conventional methods and can be used directly without further treatment, and the instruments used in the examples are commercially available.

**Example 1**

**Preparation** of Secondary **Battery**

Preparation of separator

A first porous base film was provided: The first porous base film is a PE base film, with a thickness of 5 $\mu$m, a porosity of 35%, and an ion conductivity of 1.05 mS/cm.

A second porous base film was provided: The second porous base film is a PP base film, with a thickness of 7 $\mu$m, a porosity of 40%, and an ion conductivity of 1.20 mS/cm.

A coating slurry was formulated: The coating slurry was obtained by uniformly mixing halloysite nanotubes and aqueous solution-type polyacrylic acid serving as a binder in an appropriate amount of deionized water serving as a solvent at a mass ratio of 95:5 (with the mass percentage content B of the halloysite nanotubes being 95%). The volume distribution particle size Dv50 of the halloysite nanotubes is 1.0 $\mu$m, the tube thickness H is 3 nm, and the tube length L is 0.20 $\mu$m. The average pore size $D_0$ of the halloysite nanotubes is 20 nm, the porosity P is 50%, and the specific surface area S is 80 m$^2$/g.

A coating was formed by applying the coating slurry onto the PE base film by using a coater, and the PP and PE base films were heat-pressed, such that the coating was disposed between the PP base film and the PE base film to prepare a separator. The thickness $W_1$ of the coating is 2.0 $\mu$m, and the mass percentage content of the halloysite nanotubes in the coating is 95%.

Preparation of positive electrode plate

An aluminum foil was used as a positive electrode current collector.

A positive electrode slurry was obtained by uniformly mixing LiNi$_{0.8}$Co$_{0.1}$Mn$_{0.1}$O$_2$ (NCM811) serving as a positive electrode active material, carbon black (Super P) serving as a conductive agent, and polyvinylidene fluoride (PVDF) serving as a binder in an appropriate amount of N-methylpyrrolidone (NMP) serving as a solvent at a mass ratio of 96.2:2.7:1.1. A positive electrode plate was obtained by applying the positive electrode slurry onto an aluminum foil serving as a positive electrode current collector, and performing the procedures of drying, cold pressing, slitting, cutting, and the like.

Preparation of negative electrode plate

A copper foil was used as a negative electrode current collector.

A negative electrode slurry was prepared by uniformly mixing artificial graphite serving as a negative electrode active material, Super P serving as a conductive agent, CMC serving as a thickener, and styrene-butadiene rubber (SBR) serving as a binder in deionized water at a mass ratio of 96:1:1:2. A negative electrode plate was obtained by applying the negative electrode slurry onto a copper foil serving as a current collector, and performing the procedures of drying, cold pressing, slitting, cutting, and the like.

Preparation of electrolytic solution

In an environment with a water content of less than 10 ppm, non-aqueous organic solvents ethylene carbonate EC and diethyl carbonate DMC were mixed at a volume ratio of 1:1 to obtain a solvent of an electrolytic solution. Then, a lithium salt LiPF$_6$ was mixed with the mixed solvent to prepare an electrolytic solution with a lithium salt concentration of 1 mol/L.

Preparation of secondary battery

An electrode assembly was obtained by stacking and winding the positive electrode plate, the separator, and the negative electrode plate in sequence. A secondary battery was obtained by placing the electrode assembly in an outer packaging, drying, injecting the electrolytic solution, and performing the procedures of vacuum packaging, standing, forming, shaping, and the like.

**Example 2-1 to Example 2-4**

The secondary battery was prepared in a similar manner to that in Example 1, except that:
The average pore size $D_0$ of the halloysite nanotubes used in Example 2-1 is 10 nm, the porosity P is 30%, and the specific surface area S is 100 $m^2/g$.
The average pore size $D_0$ of the halloysite nanotubes used in Example 2-2 is 75 nm, the porosity P is 70%, and the specific surface area S is 70 $m^2/g$.
The average pore size $D_0$ of the halloysite nanotubes used in Example 2-3 is 105 nm, the porosity P is 80%, and the specific surface area S is 60 $m^2/g$.
The average pore size $D_0$ of the halloysite nanotubes used in Example 2-4 is 5 nm, the porosity P is 20%, and the specific surface area S is 120 $m^2/g$.

**Example 3-1 to Example 3-2**

The secondary battery was prepared in a similar manner to that in Example 1, except that:

In Example 3-1, the thickness $W_1$ of the coating is 0.5 $\mu$m.

In Example 3-2, the thickness $W_1$ of the coating is 5.0 $\mu$m.

**Example 4-1 to Example 4-2**

The secondary battery was prepared in a similar manner to that in Example 1, except that:

In Example 4-1, the coating slurry was formulated as follows: The coating slurry was obtained by uniformly mixing the halloysite nanotubes, aluminum oxide, and aqueous solution-type polyacrylic acid serving as a binder in an appropriate amount of deionized water serving as a solvent at a mass ratio of 80: 15:5. The size specifications of the halloysite nanotubes are as described in Example 1, the mass percentage content B of the halloysite nanotubes is 80%, the volume distribution particle size Dv50 of aluminum oxide is 1 $\mu$m, the mass percentage content A of aluminum oxide is 15%, and A/B is 0.1875.

In Example 4-2, the coating slurry was formulated as follows: The coating slurry was obtained by uniformly mixing isoreticular metal-organic frameworks (IRMOFs) and aqueous solution-type polyacrylic acid serving as a binder in an appropriate amount of deionized water serving as a solvent at a mass ratio of 95:5 (with the mass percentage content B of the IRMOFs being 95%).

**Example 5-1 to Example 5-5**

The secondary battery was prepared in a similar manner to that in Example 1, except that:

In Example 5-1, the tube thickness H of halloysite is 2 nm, and the tube length L is 0.20 $\mu$m.

In Example 5-2, the tube thickness H of halloysite is 5 nm, and the tube length L is 0.20 $\mu$m.

In Example 5-3, the tube thickness H of halloysite is 10 nm, and the tube length L is 0.20 $\mu$m.

In Example 5-4, the tube thickness H of halloysite is 3 nm, and the tube length L is 0.15 $\mu$m.

In Example 5-5, the tube thickness H of halloysite is 3 nm, and the tube length L is 0.50 $\mu$m.

**Comparative Example 1**

The secondary battery was prepared in a similar manner to that in Example 1, except that the preparation parameters of the separator are different. The preparation steps of the separator of Comparative Example 1 were as follows:
A PE base film was provided: The thickness is 5 $\mu$m, the porosity is 35%, and the ion conductivity is 1.05 mS/cm.
A coating slurry was formulated: The coating slurry was obtained by uniformly mixing the halloysite nanotubes and aqueous solution-type polyacrylic acid serving as a binder in an appropriate amount of deionized water serving as a solvent at a mass ratio of 95:5.

A coating was obtained by applying the formulated coating slurry onto 1 surface of the PE substrate by using a coater, and performing a drying process, thereby preparing a separator. The mass percentage content B of the halloysite nanotubes in the coating is 95%.

**Comparative Example 2**

The secondary battery was prepared in a similar manner to that in Example 1, except that the preparation parameters of the separator are different. The preparation steps of the separator of Comparative Example 2 were as follows:

A first porous base film was provided: The first porous base film is a PE base film, with a thickness of 5 $\mu$m, a porosity of 35%, and an ion conductivity of 1.05 mS/cm.

A second porous base film was provided: The second porous base film is a PP base film, with a thickness of 7 $\mu$m, a porosity of 40%, and an ion conductivity of 1.20 mS/cm.

A coating slurry was formulated: The coating slurry was obtained by uniformly mixing aluminum oxide and aqueous solution-type polyacrylic acid serving as a binder in an appropriate amount of deionized water serving as a solvent at a mass ratio of 95:5. The volume distribution particle size Dv50 of the aluminum oxide is 1 $\mu$m. The mass percentage content B of the aluminum oxide in the coating is 95%.

**Preparation of separator:**

A coating was formed by applying the coating slurry onto the PE base film by using a coater, and the PP and PE base films were heat-pressed, such that the coating was disposed between the PP base film and the PE base film to prepare a separator.

Relevant parameters of Examples and Comparative Examples are shown in Table 1.

**Test Section**

1. Capacity retention rate test of secondary battery

The secondary battery was left to stand at 25 °C for 30 minutes, and then charged at a constant current of 1.0 C until the voltage reached 4.2 V, followed by constant voltage charging at 4.2 V until the current dropped to 0.05 C. After standing for 5 minutes, the secondary battery was discharged at a constant current of 1.0 C until the voltage dropped to 2.8 V. This is one charge-discharge cycle, and the discharge capacity of this cycle is considered the first discharge capacity of the battery. The secondary battery was subjected to 1000 cycles of charge/discharge test according to the above method, and the discharge capacity of the secondary battery after the 1000th cycle was recorded.

Capacity retention rate of the secondary battery after 1000 cycles (%) = (discharge capacity in the 1000th cycle/discharge capacity in the first cycle) $\times$ 100%.

**Result**

The test results are shown in Table 1

Table 1

| Item | Liquid absorption rate (%) | Capacity retention rate of secondary battery % |
|---|---|---|
| Example 1 | 125 | 96.3 |
| Example 2-1 | 120 | 94.5 |
| Example 2-2 | 135 | 97.2 |
| Example 2-3 | 105 | 90.8 |
| Example 2-4 | 115 | 93.5 |
| Example 3-1 | 110 | 92.7 |
| Example 3-2 | 170 | 95.3 |

(continued)

| Item | Liquid absorption rate (%) | Capacity retention rate of secondary battery % |
|---|---|---|
| Example 4-1 | 118 | 96.8 |
| Example 4-2 | 110 | 95.1 |
| Example 5-1 | 120 | 95.2 |
| Example 5-2 | 125 | 94.3 |
| Example 5-3 | 110 | 92.5 |
| Example 5-4 | 145 | 98.1 |
| Example 5-5 | 115 | 90.3 |
| Comparative Example 1 | 95 | 88.1 |
| Comparative Example 2 | 50 | 85.0 |

As can be seen from Table 1, in Comparative Example 2, aluminum oxide was used as the filler, and the liquid absorption capacity of the separator was poor. Compared with Comparative Example 2, the embodiments of the present application can significantly improve the liquid absorption capacity of the separator and increase the capacity retention rate of the secondary battery by disposing a pore-structured filler (e.g., halloysite nanotubes) between two layers of porous base films.

Compared with Comparative Example 1, the capacity retention rate of Example 1 was significantly improved. In Comparative Example 1, the coating including the halloysite nanotubes is disposed on the surface of the porous base film. The coating has a certain liquid absorption capacity and can improve the liquid absorption and retention capacities of the separator. However, since the coating is exposed on the surface of the porous base film, during the cyclic charging and discharging process of the lithium-ion battery, local areas of the coating may be detached from the surface of the porous base film, thereby degrading the cycle performance of the lithium-ion battery and resulting in a decrease in the capacity retention rate thereof. In the embodiments of the present application, the coating including the halloysite nanotubes is disposed between two layers of porous base films, which can improve the overall liquid retention capacity of the separator and enhance the structural stability of the separator, thereby improving the cycle performance of the lithium-ion battery and increasing the capacity retention rate thereof.

Although the present application has been described with reference to preferred embodiments, various modifications can be made and components can be replaced with equivalents without departing from the scope of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A separator, comprising:

   a first porous base film and a second porous base film; and
   a coating, wherein the coating is disposed between the first porous base film and the second porous base film, and the coating comprises a pore-structured filler.

2. The separator according to claim 1, wherein

   an average pore size of a pore structure of the filler is denoted as $D_0$ in nm, wherein $D_0 \geq 5$; and
   optionally, $10 \leq D_0 \leq 105$.

3. The separator according to claim 1 or 2, wherein
   a porosity of the filler is denoted as P, wherein $20\% \leq P \leq 80\%$; optionally, $20\% \leq P \leq 70\%$; and further optionally, $40\% \leq P \leq 70\%$.

4. The separator according to any one of claims 1 to 3, wherein
   a specific surface area of the filler is denoted as S in $m^2/g$, wherein $40 \leq S \leq 150$; and optionally, $60 \leq S \leq 120$.

5. The separator according to any one of claims 1 to 4, wherein
a volume distribution particle size Dv50 of the filler is 0.01 $\mu$m to 3 $\mu$m; and optionally, 0.05 $\mu$m to 2 $\mu$m.

6. The separator according to any one of claims 1 to 5, wherein the filler comprises at least one of metal-organic frameworks and mineral materials;

> optionally, the metal-organic frameworks comprise one or more of isoreticular metal-organic frameworks, zeolite-imidazolate frameworks, materials of Institute Lavoisier, pocket-channel frameworks, coordinational pillared layers, and university of oslo; and
> optionally, the mineral materials comprise one or more of halloysite nanotubes, vermiculite, attapulgite, sepiolite, montmorillonite, hectorite, kaolinite, diatomite, and hydroxylapatite; further optionally, the mineral materials comprise a through-hole structure; and still further optionally, the mineral materials comprise halloysite nanotubes.

7. The separator according to any one of claims 1 to 6, wherein the pore structure of the filler comprises at least one of a through-hole structure and a three-dimensional pore structure.

8. The separator according to any one of claims 1 to 7, wherein the filler comprises halloysite nanotubes, wherein a tube thickness of the halloysite nanotubes is H in nm, wherein $2 \leq H \leq 10$; and optionally, $2 \leq H \leq 5$; and/or
a tube length of the halloysite nanotubes is L in $\mu$m, wherein $0.05 \leq L \leq 2.50$; and optionally, $0.15 \leq L \leq 1.50$.

9. The separator according to any one of claims 1 to 8, wherein a mass percentage content of the filler in the coating is greater than or equal to 10% and less than 100%; and optionally, 30% to 95%.

10. The separator according to any one of claims 1 to 9, wherein a thickness of the coating is $W_1$ in $\mu$m, wherein $W_1 \geq 0.3$; optionally, $W_1 \geq 0.5$; and further optionally, $0.5 \leq W_1 \leq 5.0$.

11. The separator according to any one of claims 1 to 10, wherein the coating further comprises a heat-resistant filler;

> optionally,
> a porosity of the heat-resistant filler is less than 15%; further optionally, less than 10%; and still further optionally, less than 5%; and/or
> an average pore size of the heat-resistant filler is less than or equal to 0.5 nm;
> optionally, a mass percentage content of the heat-resistant filler in the coating is denoted as A, and the mass percentage content of the pore-structured filler in the coating is denoted as B, wherein $0.1 \leq A/B \leq 10$;
> optionally, the mass percentage content of the heat-resistant filler in the coating is less than or equal to 85%; and
> optionally, the heat-resistant filler comprises at least one of inorganic particles and organic particles.

12. The separator according to any one of claims 1 to 11, wherein the coating further comprises a binder; and
optionally, the binder comprises one or more of polyacrylate, acrylic acid, carboxymethyl cellulose, polyvinylidene fluoride-co-trichloroethylene copolymer, polymethyl methacrylate, polyvinylpyrrolidone, polyvinyl acetate, polyethylene-co-vinyl acetate copolymer, polyethylene oxide, polyarylate, cellulose acetate, cellulose acetate butyrate, cellulose acetate propionate, polyvinylidene fluoride, polyacrylonitrile, polyvinyl alcohol, starch, hydroxypropyl cellulose, regenerated cellulose, tetrafluoroethylene, polyethylene, polypropylene, and cyanoethyl amylopectin.

13. The separator according to any one of claims 1 to 12, wherein a melting point of the first porous base film is less than or equal to a melting point of the second porous base film.

14. The separator according to claim 13, wherein

> a ratio of an average pore size of the first porous base film to an average pore size of the second porous base film is greater than 1; and optionally, greater than or equal to 1.05; and
> optionally,
> the average pore size of the first porous base film is 0.1 $\mu$m to 2 $\mu$m; and more optionally, 0.1 $\mu$m to 0.5 $\mu$m; and/or
> the average pore size of the second porous base film is 0.1 $\mu$m to 2 $\mu$m; and more optionally, 0.1 $\mu$m to 0.35 $\mu$m.

15. The separator according to claim 13 or 14, wherein

a porosity of the first porous base film is $P_1$, and a porosity of the second porous base film is $P_2$, wherein $P_1/P_2 \geq 1.02$; and optionally, $1.05 \leq P_1/P_2 \leq 2.50$.

16. The separator according to any one of claims 13 to 15, wherein

the porosity of the first porous base film $P_1$ is 30% to 80%; and optionally, 35% to 50%; and/or
the porosity of the second porous base film $P_2$ is 25% to 70%; and optionally, 35% to 45%.

17. The separator according to any one of claims 13 to 16, wherein
a ratio of a thickness of the first porous base film to a thickness of the second porous base film is greater than or equal to 1.02; and optionally, 1.2 to 5.0.

18. The separator according to any one of claims 13 to 17, wherein

the thickness of the first porous base film is 1 $\mu$m to 12 $\mu$m; and optionally, 3 $\mu$m to 6 $\mu$m; and/or
the thickness of the second porous base film is 2 $\mu$m to 12 $\mu$m ; and optionally, 3 $\mu$m to 5 $\mu$m.

19. The separator according to any one of claims 13 to 17, wherein

an ion conductivity of the first porous base film is greater than an ion conductivity of the second porous base film; optionally, the ion conductivity of the first porous base film is 0.5 mS/cm to 1.5 mS/cm; and optionally, 0.7 mS/cm to 1.3 mS/cm; and
optionally, the ion conductivity of the second porous base film is 0.4 mS/cm to 1.5 mS/cm; and optionally, 0.6 mS/cm to 1.3 mS/cm.

20. The separator according to any one of claims 1 to 19, wherein the separator satisfies:
a liquid absorption rate of the separator being 80% to 180%; and optionally, 100% to 170%.

21. A secondary battery, comprising the separator according to any one of claims 1 to 20.

22. An electric device, comprising the secondary battery according to claim 21.

5

FIG. 1

5

53

52
52

51

FIG. 2

4

5

5

5

FIG. 3

1

FIG. 4

1

2

4
4
4

4

4

4

3

FIG. 5

6

1

FIG. 6

**INTERNATIONAL SEARCH REPORT**

| International application No. |
| --- |
| **PCT/CN2023/087319** |

**A.    CLASSIFICATION OF SUBJECT MATTER**

H01M50/491(2021.01)i

According to International Patent Classification (IPC) or to both national classification and IPC

**B.    FIELDS SEARCHED**

Minimum documentation searched (classification system followed by classification symbols)

IPC:H01M

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 电池, 隔膜, 隔离膜, 隔板, 多孔, 涂层, 填料, 埃洛石纳米管, 夹, 第二, 金属有机框架, batter???, cell?, separator?, porous, coat+ w layer, filler, halloysite, nanotube, between, second, metal w organic w frame, MOF

**C.    DOCUMENTS CONSIDERED TO BE RELEVANT**

| Category* | Citation of document, with indication, where appropriate, of the relevant passages | Relevant to claim No. |
| --- | --- | --- |
| Y | CN 109980164 A (NINGDE AMPEREX TECHNOLOGY LTD.) 05 July 2019 (2019-07-05) description, paragraphs 4-48 and 96 | 1-22 |
| Y | CN 105098118 A (CHANGXING DONGFANGHONG PACKAGE CO., LTD.) 25 November 2015 (2015-11-25) description, paragraphs [0005]-[0028] | 1-22 |
| Y | CN 115810867 A (NINGDE CONTEMPORARY AMPEREX TECHNOLOGY CO., LTD.) 17 March 2023 (2023-03-17) description, paragraphs 4-49 | 6 |
| A | CN 115832623 A (NINGDE CONTEMPORARY AMPEREX TECHNOLOGY CO., LTD.) 21 March 2023 (2023-03-21) entire document | 1-22 |
| A | CN 105061791 A (CHANGXING DONGFANGHONG PACKAGE CO., LTD.) 18 November 2015 (2015-11-18) entire document | 1-22 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **13 July 2023** | **25 December 2023** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/087319** |

### C. DOCUMENTS CONSIDERED TO BE RELEVANT

| Category* | Citation of document, with indication, where appropriate, of the relevant passages | Relevant to claim No. |
| --- | --- | --- |
| A | CN 115513604 A (SHANGHAI ENERGY NEW MATERIALS TECHNOLOGY CO., LTD.) 23 December 2022 (2022-12-23) entire document | 1-22 |

Form PCT/ISA/210 (second sheet) (July 2022)

**INTERNATIONAL SEARCH REPORT**
Information on patent family members

International application No.

**PCT/CN2023/087319**

| Patent document cited in search report | | | Publication date (day/month/year) | Patent family member(s) | | | Publication date (day/month/year) |
|---|---|---|---|---|---|---|---|
| CN | 109980164 | A | 05 July 2019 | EP | 3712983 | A1 | 23 September 2020 |
| | | | | US | 2020303707 | A1 | 24 September 2020 |
| | | | | US | 11374286 | B2 | 28 June 2022 |
| CN | 105098118 | A | 25 November 2015 | None | | | |
| CN | 115810867 | A | 17 March 2023 | None | | | |
| CN | 115832623 | A | 21 March 2023 | None | | | |
| CN | 105061791 | A | 18 November 2015 | None | | | |
| CN | 115513604 | A | 23 December 2022 | CN | 218769957 | U | 28 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 195872017 T
- GB 24586 T
- GB 1907712016 T